# DEMANDE DE BREVET EUROPEEN

(11) **EP 1 199 866 A1**
(43) Date de publication de la demande: **24.04.2002**
(21) Numéro de dépôt: 01000538.7
(22) Date de dépôt: 12.10.2001
(51) Int. Cl.: H04M 1/03

(54) **Dispositif de diffusion acoustique pour téléphone mobile**

(30) Priorité: 17.10.2000 FR 0013526
(71) Demandeur: SAGEM S.A., 75015 Paris (FR)
(72) Inventeur: HOUSNI, Jamal, 92400, COURBEVOIE (FR)
(74) Mandataire: Schmit, Christian Norbert Marie

(57) **Abrégé**

Pour limiter des parasites produits par le signal rayonné par l'antenne (10) d'un téléphone (1) mobile sur son propre haut-parleur (11), on dispose celui-ci dans une zone (12) comprise entre l'écran (4) et le clavier (5), ce qui permet d'agrandir ce haut-parleur, un volume disponible dans cette zone étant plus important qu'aux extrémités, afin d'avoir, en outre, une meilleure acoustique.

## Description

La présente invention a pour objet un dispositif de diffusion acoustique pour téléphone mobile permettant d'améliorer la qualité du son diffusé par le téléphone mobile et le confort d'écoute de l'utilisateur. L'invention s'applique au domaine de la téléphonie mobile et, en particulier, aux téléphones mobiles monoblocs, c'est-à-dire sans volet rabattable sur le clavier.

Actuellement, un téléphone mobile monobloc comporte un boîtier qui sert de coque au téléphone et qui comporte tous les éléments essentiels au fonctionnement du téléphone et, notamment, un dispositif de diffusion acoustique tel qu'un haut-parleur, par exemple à membrane, un microphone, un écran de visualisation et un clavier de numérotation.

Le dispositif de diffusion acoustique comporte un ensemble d'orifices, ou au moins un orifice, réalisés dans la coque du téléphone mobile, et assurant un passage du son produit par le haut-parleur vers l'extérieur.

La coque du téléphone mobile comporte une façade avant, une façade arrière et une épaisseur ou tranche. La tranche est apparente par un chant supérieur, un chant inférieur et deux chants latéraux gauche et droite.

La façade avant comporte généralement un écran de visualisation et un clavier de numérotation. La façade arrière comporte généralement un bloc d'alimentation électrique du téléphone mobile. Généralement, un dispositif de rayonnement du téléphone est situé à proximité du chant supérieur voire même sur ce chant lorsque ce dispositif est saillant sous la forme d'une antenne par exemple. Le haut-parleur ainsi que les orifices sont aussi disposés à proximité de ce chant supérieur, entre ce dernier et l'écran.

Cette réalisation présente des problèmes. En effet, le haut-parleur est un dispositif recevant des signaux électriques dont une fréquence audible est actuellement au maximum d'une dizaine de kHz. Le dispositif de rayonnement reçoit quant à lui des signaux haute fréquence de puissance modulés par un signal basse fréquence. Ce signal basse fréquence est rayonné autour de l'antenne et constitue donc pour le haut-parleur un signal parasite qui vient perturber le signal acoustique produit par ce haut-parleur.

En outre, lorsqu'un utilisateur applique un tel téléphone mobile monobloc à son oreille, il cherche instinctivement une partie plate de ce téléphone à apposer sur le lobe de son oreille. Cette partie plane correspond à l'écran, les boutons du clavier apparaissant comme trop agressifs. Cette application conduit à un inconfort d'écoute puisque la surface située à proximité du chant supérieur et comportant les orifices est alors portée contre la partie supérieure du lobe de l'oreille. Cette partie supérieure étouffe un peu les sons. Cependant une telle attitude est impliquée par la présence du microphone situé à proximité du chant inférieur, qui invite à mettre ce microphone en regard de la bouche et qui est éloigné du haut-parleur pour limiter les effets de couplage haut-parleur microphone.

L'invention a pour but de résoudre ces problèmes en proposant un téléphone mobile monobloc dont une position du haut-parleur et de l'orifice est optimisée afin de réduire un effet du signal parasite et d'améliorer un contact entre l'oreille de l'utilisateur et le téléphone. Dans l'invention, on a alors choisi de placer les orifices, et de préférence aussi le haut-parleur, entre l'écran et le clavier.

L'invention concerne donc un téléphone mobile monobloc comportant un dispositif de diffusion acoustique, à l'intérieur d'un boîtier servant de coque au téléphone mobile, coopérant avec un orifice sur une façade avant de la coque, cet orifice assurant un passage à un signal acoustique produit par le dispositif de diffusion acoustique, caractérisé en ce que le dispositif de diffusion acoustique comporte un orifice disposé dans une zone intermédiaire située entre une portion de la façade avant accueillant un écran de visualisation et une portion de la façade avant accueillant un clavier permettant la composition d'un numéro de téléphone.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1 : un exemple de réalisation d'un téléphone mobile selon l'invention.
- Figure 2 : une vue en coupe d'une position préférée du haut-parleur dans le téléphone mobile de l'invention.

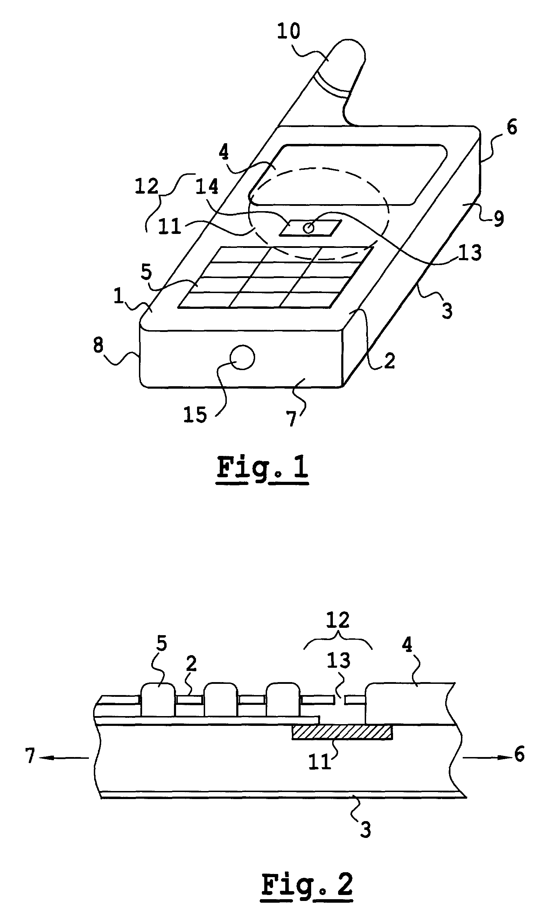

La figure 1 montre un téléphone 1 mobile selon l'invention. Ce téléphone 1 comporte une façade 2 avant, en regard d'une façade 3 arrière. La façade 2 comporte une première portion accueillant un écran 4 de visualisation et une deuxième portion accueillant un clavier 5. Ce clavier 5 permet la composition d'un numéro de téléphone d'un correspondant à joindre. L'écran 4 sert d'écran de visualisation d'informations émises par le téléphone 1 à destination d'un utilisateur. La façade 3 correspond à celle permettant un accès à un dispositif d'alimentation électrique amovible du téléphone 1. Le téléphone 1 comporte en outre un chant 6 supérieur, un chant 7 inférieur, un chant 8 latéral gauche et un chant 9 latéral droit. Ces repères sont donnés par rapport à une prise en main du téléphone 1 avec la façade 2 visible, l'écran étant placé en haut et le clavier en bas. Les façades 2 et 3 ainsi que les chants 6 à 9 forment un boîtier de protection ou encore une coque du téléphone 1. Lorsque le téléphone 1 comporte un dispositif 10 de rayonnement saillant, celui-ci est disposé sur ou à proximité du chant 6. Dans le cas d'un dispositif de rayonnement interne à la coque, celui-ci est disposé à proximité du chant 6. L'écran 4 est généralement situé, sur la façade 2, du côté le plus proche du chant 6 alors que le clavier 5 est quant à lui situé, sur la façade 2, du côté le plus proche du chant 7.

En outre, le téléphone 1 comporte un dispositif 11 de diffusion acoustique tel qu'un haut-parleur à membrane par exemple. Dans l'invention, ce dispositif 11 est disposé dans une zone 12 intermédiaire entre l'écran 4 et le clavier 5. Cette zone 12 correspond à un espacement qui existe entre l'écran 4 et le clavier 5. En outre, ce dispositif 11 coopère avec un orifice 13, sur la façade 2, l'orifice 13 assure un passage à un signal acoustique produit par le dispositif 11. Cet orifice 13 est aussi disposé dans la zone 12. Ceci permet ainsi à l'écran 4 de servir de support à une oreille de l'utilisateur avec laquelle le téléphone 1 vient en contact pour une communication. Ainsi, l'utilisateur peut apposer sur le lobe supérieur de son oreille une surface plane améliorant un confort d'écoute : l'orifice 13 débouche directement en regard du conduit de cette oreille. Ceci permet en outre, comme on le verra plus loin, d'éloigner le haut-parleur 11 du dispositif 10 qui, en émettant des signaux de puissance modulés par un signal basse fréquence, joue le rôle d'un émetteur de signal parasite vis à vis du haut-parleur 11. On notera par ailleurs que, du fait des habitudes des utilisateurs une telle modification est facilement acceptée : ces habitudes ne sont pas modifiées. Par ailleurs, le fait que l'oreille reste plaquée contre l'orifice 13 empêche les effets Larsen.

En outre, comme représenté sur la figure 2, un volume libre à l'intérieur de la coque est plus important dans la zone 12 du haut-parleur 11 qu'à l'extrémité proche du chant 6. Ainsi, un diamètre du haut-parleur 11 peut être augmenté ce qui améliore une qualité des signaux acoustiques produits. De même, un volume arrière du haut-parleur 11 est plus important dans cette zone intermédiaire 12 ce qui contribue aussi à une amélioration de la qualité acoustique. Donc le haut-parleur peut être plus grand, et il fonctionne en plus mieux. Dans l'exemple, le haut-parleur 11 peut même venir empiéter sous l'écran 4 et sous le clavier 5. Dans un exemple, le haut-parleur 11 a une forme ovale, ou en ellipse dont un grand axe est perpendiculaire à la plus grande dimension du téléphone 1.

Par ailleurs, un format de l'écran 4 peut être augmenté puisque l'espace entre le chant 6 et l'écran 4, occupé auparavant par les orifices du haut-parleur, est maintenant libéré.

La zone 12 existe déjà dans le téléphones connus. En effet, la zone 12 comporte généralement au moins un bouton 14 de menu ou encore de navigation. En général elle en comporte trois. Dans une variante, l'orifice 13, généralement un trou, est disposé dans un bouton 14, par exemple central à cette zone 12. C'est à dire que le trou formant l'orifice 13 est réalisé dans le bouton 14. Généralement, un bouton du clavier 5 ou le bouton 14 de menu est une pièce mécanique indépendante et solide, associée à une pièce en matière étanche et souple, généralement une matière plastique, assurant un contact électrique. Cette pièce permet ainsi de rendre étanche la zone où la façade 2 est trouée pour disposer les différents boutons. En conséquence, la réalisation d'un trou dans le bouton 14 permet d'assurer, en outre, une étanchéité de la membrane du haut-parleur 11 qui est généralement réalisée à partir d'un matériau sensible à l'humidité. Toutefois, cette pièce étanche permet d'isoler les circuits électroniques à l'intérieur du téléphone 1 de l'environnement extérieur.

Dans une variante, le téléphone 1 comporte un accès microphone, sous la forme d'un trou 15 dans le chant 7 par exemple, à un microphone disposé derrière le chant 7 au lieu de se trouver derrière la façade 2. En effet, avec le positionnement du haut-parleur 11 en zone 12, une position du téléphone 1 contre l'oreille d'un locuteur est plus haute. Ceci conduit donc à un éloignement entre l'accès microphone en façade microphone et la bouche de l'utilisateur. Cette disposition peut conduire à une faible efficacité du microphone, lorsqu'il est situé sur la façade 2, qui se retrouve alors plaqué sur une joue de l'utilisateur. Avec le microphone placé en regard du trou 15 dans le chant 7, cette efficacité est rétablie, tout en limitant un effet Larsen lorsque le téléphone 1 est utilisé en écoute amplifiée, du fait de la désorientation de l'accès microphone par rapport à la façade 2. On s'est par ailleurs rendu compte que cette position dans le chant 7 ne réduisait pas la qualité des paroles transmises par le locuteur.

Dans un exemple l'orifice 13 n'est pas ponctuel mais a plutôt une forme allongée, et même une forme allongée courbe, en banane par exemple. Dans la variante représentée, le haut-parleur 11 est placé dans la zone 12. Il est toutefois possible de le déplacer notamment complètement sous le clavier 5 pour des raisons de commodité de réalisation.

## Revendications

1. Téléphone (1) mobile monobloc comportant un dispositif (11) de diffusion acoustique, à l'intérieur d'un boîtier servant de coque au téléphone mobile, coopérant avec un orifice (13) sur une façade (2) avant de la coque, cet orifice assurant un passage à un signal acoustique produit par le dispositif de diffusion acoustique, **caractérisé en ce que** le dispositif de diffusion acoustique comporte un orifice disposé dans une zone (12) intermédiaire située entre une portion de la façade avant accueillant un écran (4) de visualisation et une portion de la façade avant accueillant un clavier (5) permettant la composition d'un numéro de téléphone.

2. Téléphone mobile selon la revendication 1 **caractérisé en ce que** l'orifice est disposé dans un bouton (14) de menu.

3. Téléphone mobile selon l'une des revendications 1 ou 2 **caractérisé en ce qu'**un accès (15) à un microphone est placé sur un chant (7) inférieur du téléphone mobile.

4. Téléphone mobile selon l'une des revendications 1 à 3 **caractérisé en ce que** l'orifice a une forme en banane.

5. Téléphone mobile selon l'une des revendications 1 à 4 **caractérisé en ce qu'**un haut-parleur est aussi disposé en position intermédiaire, en regard de l'orifice.

6. Téléphone mobile selon l'une des revendications 1 à 5 **caractérisé en ce que** le haut-parleur empiète sous le clavier et/ou sous l'écran.

7. Téléphone mobile selon l'une des revendications 1 à 6 **caractérisé en ce que** le haut-parleur a une forme ovale.
